# EUROPEAN PATENT SPECIFICATION

(11) **EP 3 569 921 B1**
(45) Date of publication and mention of the grant of the patent: **28.08.2024**
(21) Application number: 19173805.3
(22) Date of filing: 10.05.2019
(51) Int. Cl.: F17C 13/04, F16K 31/122, F16K 31/124, F16K 31/42

(54) **POPPET TYPE PNEUMATIC VALVE FOR INFLATION SYSTEM**
PNEUMATISCHES TELLERVENTIL FÜR EIN AUFBLASSYSTEM
SOUPAPE PNEUMATIQUE DE TYPE CHAMPIGNON POUR SYSTÈME DE GONFLAGE

(30) Priority: 17.05.2018 IN 201811018546
(43) Date of publication of application: 20.11.2019
(73) Proprietor: Goodrich Corporation, Charlotte, NC 28217-4578 (US)
(72) Inventor: JOHN, Poly Purthur, 560076 Bangalore, Karnataka (IN)
(74) Representative: Dehns

(56) References cited:
- DE-A1- 10 232 740
- US-A- 3 467 129
- US-B2- 8 087 637

## Description

### CROSS-REFERENCE TO RELATED APPLICATIONS

This application claims the benefit of Indian Patent Application No. 201811018546, filed May 17, 2018.

### BACKGROUND

The following description relates to an inflation system and, more particularly, to an inflation system with a poppet type pneumatic valve.

Pneumatic inflation systems typically use high pressure stored gas to inflate a body. The stored gas needs to be discharged into that body within a specified period of time by the opening of a normally closed valve. This normally closed valve can be a flow isolation valve and can be mechanically or electrically actuated. Electrical actuation uses squib initiators.

In conventional pneumatic inflation systems, a normally closed main valve is sealed to a gas bottle. In its closed position, inlet fluid pressure acts on a spool in an opening direction and the pressure is opposed by mechanical interference and friction between the spool and an actuator piston rod. An electrical squib actuates the pneumatic valve opening. Electrical squibs are single shot devices and are subject to regulatory issues and thus non-pyro type electric initiators are often desired.

Once the main valve is actuated by the electrical squib, the opening position of the valve is sustained by fluid pressure force acting at the spool.

Most pneumatic inflation systems are not pressure balanced, and actuation forces increase with main valve size and operating pressures. Also, the pneumatic valves typically use elastomer O-ring seals for internal leak tightness in closed positions, but this leads to difficulties in achieving good leak tightness at extreme operating temperatures. Moreover, once the valves are actuated, they need to be dismantled and reset to closed positions for further use with a new electrical squib. DE 102 32 740 relates to a fire extinguishing system.

The invention relates to an inflation system in accordance with independent claim 1. Advantageous features are included in the dependent claims.

These and other advantages and features will become more apparent from the following description taken in conjunction with the drawings.

### BRIEF DESCRIPTION OF THE DRAWINGS

FIG. 1 is a side view of a poppet type pneumatic valve of an inflation system in a closed condition in accordance with embodiments;
FIG. 2 is a side view of the poppet type pneumatic valve of FIG. 1 in an open condition in accordance with embodiments;
FIG. 3 is an enlarged side view of the poppet type pneumatic valve of FIGS. 1 and 2 in accordance with embodiments;
FIG. 4 is an enlarged side view of a vent of the poppet type pneumatic valve of FIGS. 1 and 2 in accordance with embodiments; and
FIG. 5 is a flow diagram illustrating a method of operating an inflation system in accordance with embodiments.

These and other advantages and features will become more apparent from the following description taken in conjunction with the drawings.

### DETAILED DESCRIPTION

As will be described below, a new pneumatic valve system is provided and includes a poppet type valve unit that is operated by a two-way solenoid valve. The pneumatic valve system is pressure balanced, smaller than conventional systems and can be designed to achieve good leak tightness at extreme operating temperatures.

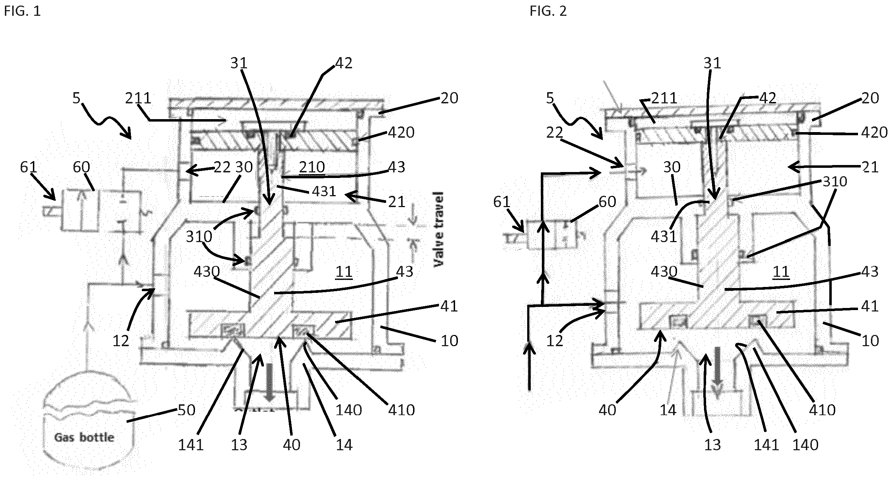

With reference to FIGS. 1 and 2, an inflation system 5 is provided and includes a housing assembly that in turn includes a first housing 10, a second housing 20 and a baffle 30. The first housing 10 is formed to define an inlet cavity 11, an inlet 12, which is fluidly communicative with the inlet cavity 11 and an outlet 13, which is also fluidly communicative with the inlet cavity 11. The second housing 20 is formed to define a secondary cavity 21 and a secondary inlet 22, which is fluidly communicative with the secondary cavity 21. The baffle 30 is interposed between the first housing 10 and the second housing 30 and is formed to define an aperture 31. The aperture 31 extends from the secondary cavity 21 to the inlet cavity 11 and has a diameter. Sidewalls of the aperture 31 and a guide feature disposed about the aperture 31 may be formed to define grooves into which dynamic seals 310 are insertible. The dynamic seals 310 may be provided as O-rings, for example.

The first housing 10 includes a valve seat 14. The valve seat 14 is disposed about the outlet 13 and includes raised features 140 and an inwardly tapered, flow restricting orifice 141.

The inflation system 5 further includes a poppet 40. The poppet 40 includes a first piston 41, a second piston 42 and a stem 43.

The first piston 41 is disposable in the inlet cavity 11 and is configured to assume a closed position (see FIG. 1) or an open position (see FIG. 2) in the inlet cavity 11. The first piston 41 has an exterior or lower face, which is formed to define a groove into which a valve seal 410 is insertible. The valve seal 410 engages with the raised features 140 of the valve seat 14 when the first piston 41 assumes the closed condition such that fluid flow out of the inlet cavity 11 through the outlet 13 is prevented. The valve seal 410 disengages from the raised features 140 when the first piston 410 assumes the open condition such that the fluid flow out of the inlet cavity 11 through the outlet 13 is permitted. The valve seal 410 may be provided as an O-ring, for example.

The second piston 42 is disposable in the secondary cavity 21 and configured to sealably divide the secondary cavity 21 into a command cavity 210 at an interior or lower face of the second piston 42 and a dummy cavity 211 at an exterior or higher face of the second piston 42. The secondary inlet 22 is fluidly communicative with the command cavity 210. A radially outward face of the second piston 42 closely abuts with a sidewall of the second housing 20 and is formed to define a groove into which a dynamic seal 420 is insertible. The dynamic seal 420 seals the command cavity 210 from the dummy cavity 211 along the sidewall of the second housing 20 while permitting movement of the second piston 42. The second seal may be provided as an O-ring, for example.

The stem 43 is connectable to the first piston 41 at a first end thereof and to the second piston 42 at a second end thereof. As such, the poppet 40 moves within the first and second housings 10 and 20 of the housing assembly as a singular element. The stem 43 is disposable to sealably extend through the aperture 31 of the baffle 30 and includes a first section 430, which is proximate to the first piston 41, and a second section 431, which is proximate to the second piston 42. The second section 431 extends from an end of the first section 430, through the aperture 31 and into the command cavity 210. The first section 430 has a diameter that exceeds the diameter of the aperture 31 and the second section 431 has a diameter which is substantially similar to the diameter of the aperture 31. Thus, while the second section 431 can be slid through the aperture 31 (and the dynamic seals 310), the end of the first section 430 acts as a mechanical stop when it impinges upon the baffle 30.

In accordance with embodiments, the dynamic seal 310 engaging with the first section 430 is larger than the dynamic seal 310 engaging with the second section 431 and is smaller than the effective seal diameter of the valve seal 410.

The stem 43 may be integrally connected or fastened to one or both of the first piston 41 and the second piston 42. For example, the stem 43 may be integrally connected to the first piston 41 and fastened to the second piston 42. The fastening may include a static seal.

As shown in FIG. 1, a valve travel distance is the distance between the end of the first section 430 and the lower face of the baffle 30 when the first piston 41 assumes the closed condition.

The inflation system 5 also includes a pressurized bottle 50 and a solenoid valve 60. The pressurized bottle 50 contains a pressurized gas, which can be used to inflate an inflatable element coupled to the outlet 13. The pressurized bottle 50 is directly fluidly coupled to the inlet 12 such that the inlet cavity 11 is pressurized. This pressurization of the inlet cavity 11 serves to bias the first piston 41 toward assuming the closed condition. The pressurized bottle 50 is also indirectly fluidly coupled to the secondary inlet 22, with the solenoid valve 60 being fluidly interposable between the pressurized bottle 50 and the command cavity 210 or removed from that position. That is, the solenoid valve 60 may be configured to be normally closed and selectively openable. When the solenoid valve 60 is normally closed, the solenoid valve 60 prevents fluid flow from the pressurized bottle 50 to the secondary inlet 22 and the command cavity 210. Conversely, when the solenoid valve 60 is selectively opened, the solenoid valve 60 permit fluid flow from the pressurized bottle 50, through the secondary inlet 22 and into the command cavity 210.

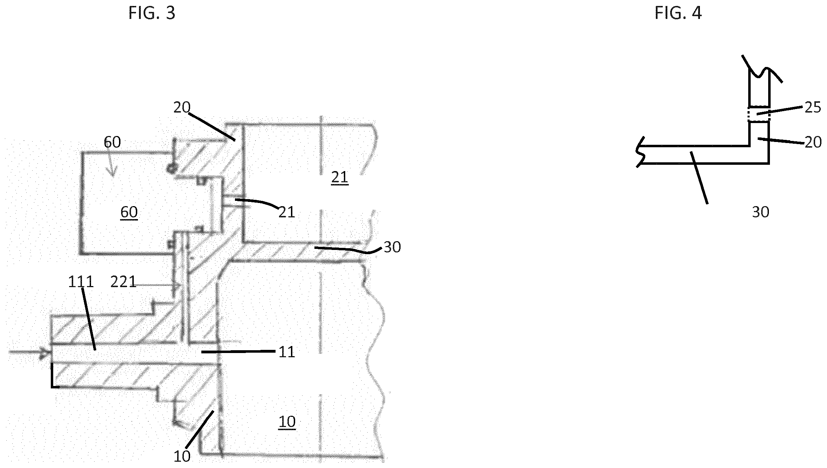

In accordance with embodiments and with reference to FIG. 3, fluid couplings between the pressurized bottle 50 and the inlet 11 and between the pressurized bottle 50, the solenoid valve 60 and the secondary inlet 22 may be provided through respective manifolds of the first and second housings 10 and 20 (e.g., along inlet line 111 or pilot pressure line 221).

The solenoid valve 60 may include a solenoid 61 or, in some cases, an electrical or pyrotechnic squib. When the solenoid 61 is de-energized as shown in FIG. 1, the solenoid 61 is disposed between the pressurized bottle 50 and the secondary inlet 22. When the solenoid 61 is energized as shown in FIG. 2, the solenoid 61 is removed from its original or normal position and permits the fluid flow from the pressurized bottle 50, through the secondary inlet 22 and into the command cavity 210.

Once the solenoid 61 is energized and the fluid flow from the pressurized bottle 50, through the secondary inlet 22 and into the command cavity 210 is permitted, the fluid flow pressurizes the command cavity 210 and develops higher pressure force than the inlet cavity 11. This pressurization of the command cavity 210 also exceeds a pressure inside the dummy cavity 211 and thus applies a bias to the second piston 42. This bias on the second piston 42 drives the first piston 41 with the stem 43 toward assuming the open position relative to the valve seat 14. At this point, the pressurized fluid inside the inlet cavity 11 begins to flow out of the inlet cavity 11 through the outlet 13 (and into the inflatable element).

With the pressurized fluid flowing out of the inlet cavity 11 through the outlet 13 (and into the inflatable element), the solenoid 61 can be de-energized. At this point, the fluid flowing through the outlet 13 interacts with the inwardly tapered, flow restricting orifice 141 to apply a bias onto the first piston 41. This bias on the first piston 41 along with the pressure force acting on the dynamic seal 310 engaging the first section 430 of the stem 43, the friction between dynamic seal 420 and the sidewalls of the second housing 20 and the friction between the second section 431 of the stem 43 and the dynamic seal 310 maintains the poppet 40 in the position at which the first piston 41 assumes the open condition. In this way, the inflation system 5 is pneumatically balanced in the open condition.

Once the pressurized gas is spent, the inflation system 5 is reset. This can be accomplished by removing an end cap of the second housing 20 and pushing down onto the second piston 42 to return the poppet 40 to its original position (at which the first piston 41 assumes the closed condition) and replacing the pressurized bottle. As an additional or alternative example, the second housing 20 may also include an elastic element, which applies an elastic bias onto the second piston 42 that automatically returns the poppet 40 to its original position (at which the first piston 41 assumes the closed condition).

In accordance with embodiments and with reference to FIG. 4, the second housing 20 may also include a vent system especially in cases of long-pressure hold times. As shown in FIG. 4, the vent system may include a vent 25 to vent leaked gas from the solenoid valve 60 during the pressure holding times.

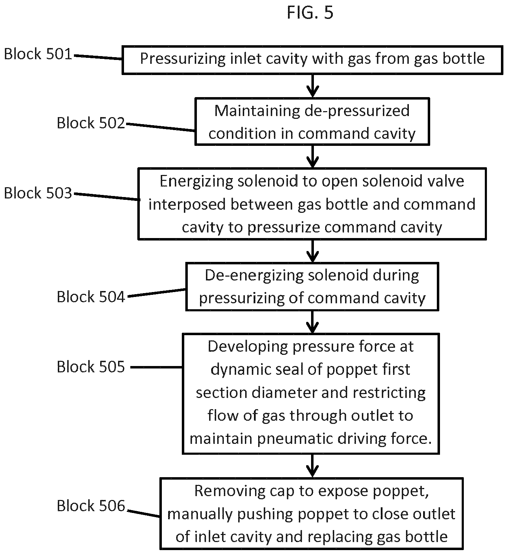

With reference to FIG. 5, a method of operating the inflation system 5 is provided. The method includes pressurizing an inlet cavity with a gas from a gas bottle (block 501), maintaining a de-pressurized condition in a command cavity (block 502) and energizing a solenoid to open a solenoid valve interposed between the gas bottle and the command cavity to pressurize the command cavity (block 503) to thereby pneumatically drive a poppet to open an outlet of the inlet cavity through which the gas flows. The method further includes de-energizing the solenoid during the pressurizing of the command cavity (block 504) and restricting flows of the gas through the outlet and developing a pressure force at the dynamic seal 310 engaging the stem 430 to maintain the pneumatic driving of the poppet while de-energizing the solenoid (block 505). The method may also include removing a cap to expose the poppet, pushing the poppet to close the outlet of the inlet cavity and replacing the gas bottle (block 506) or biasing the poppet to close the outlet of the inlet cavity and replacing the gas bottle.

In accordance with embodiments, the seals described herein are designed to ensure sealing stress within yield limits of the sealing material. Soft polymer sealing materials can be used to achieve good leak tightness over wide temperature ranges. For the pressure balancing dynamic seals, either elastomeric O-ring seals or spring-energized polymer lip seals (e.g., OMINI^{™} seals) can be used. A central screw of the fastening can be designed to withstand various pressure loads.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, without departing from the scope of the appended claims.

## Claims

1. An inflation system (5), comprising:
a housing assembly defining an inlet cavity (11) with an inlet (12) and an outlet (13) comprising a flow restricting orifice (141) and a command cavity (21);
a poppet (40) disposable within the housing assembly to assume open or closed positions;
multiple seals (310, 420) between the housing assembly and the poppet;
a pressurized bottle (50) to pressurize the inlet cavity (11) through the inlet to bias the poppet (40) toward the closed position; and **characterized by**
a solenoid valve (60) interposable between the pressurized bottle (50) and the command cavity (21),
wherein the housing assembly comprises first and second housings (10,20) and a baffle (30) interposed between the first and second housings (10,20);
wherein the first housing (10) defines:
the inlet (12) through which the pressurized bottle (50) pressurizes the inlet cavity (11), and
the outlet (13) through which pressurized fluid exits the inlet cavity (11) with the poppet (40) assuming the open position;
wherein the flow restricting orifice (141) comprises an inward taper;
the solenoid valve (60) being normally closed and selectively openable to permit fluid flow from the pressurized bottle (50) to pressurize the command cavity such that the poppet (40) is biased toward the open position whereby pressurized fluid flows through the outlet,
wherein the solenoid is configured to be de-energized during command cavity (21) pressurization whereupon pressures applied on the poppet (40) by the seals and the flow restricting orifice maintain the poppet (40) in the open position.

2. The inflation system according to claim 1, wherein a first piston of the poppet has an exterior or lower face that defines a groove in which a valve seal is insertible and the first housing (10) comprises a valve seat with raised features that sealably engage with the valve seal assuming the closed position.

3. The inflation system according to claim 1, wherein the second housing (20) defines a secondary inlet (22) through which the pressurized bottle (50) pressurizes the command cavity with the solenoid valve (60) selectively opened.

4. The inflation system according to claim 1, wherein the second housing (20) comprises a removable end cap.

5. The inflation system according to claim 1, wherein:
the baffle (30) defines an aperture (31), and
the poppet (40) comprises a stem (43), which comprises a first section having a diameter that exceeds a diameter of the aperture (31) and a second section that extends from the first section, through the aperture (31) and into the command cavity.

## Patentansprüche

1. Aufblassystem (5), Folgendes umfassend:
eine Gehäuseanordnung, die einen Einlasshohlraum (11) mit einem Einlass (12) und einem Auslass (13) definiert, umfassend eine Strömungsbegrenzungsöffnung (141) und einen Befehlshohlraum (21) ;
einen Dichtteller (40), der innerhalb der Gehäuseanordnung anordenbar ist, um offene oder geschlossene Positionen einzunehmen;
mehrere Dichtungen (310, 420) zwischen der Gehäuseanordnung und dem Dichtteller;
eine druckbeaufschlagte Flasche (50), um den Einlasshohlraum (11) durch den Einlass mit Druck zu beaufschlagen, um den Dichtteller (40) in Richtung der geschlossenen Position vorzuspannen; und **gekennzeichnet durch**
ein Magnetventil (60), das zwischen der druckbeaufschlagten Flasche (50) und dem Befehlshohlraum (21) angeordnet ist,
wobei die Gehäuseanordnung ein erstes und ein zweites Gehäuse (10, 20) und eine Trennwand (30) umfasst, die zwischen dem ersten und dem zweiten Gehäuse (10, 20) angeordnet ist;
wobei das erste Gehäuse (10) Folgendes definiert:
den Einlass (12), durch den die druckbeaufschlagte Flasche (50) den Einlasshohlraum (11) mit Druck beaufschlagt, und
den Auslass (13), durch den druckbeaufschlagtes Fluid aus dem Einlasshohlraum (11) austritt, wobei der Dichtteller (40) die offene Position einnimmt;
wobei die Strömungsbegrenzungsöffnung (141) eine Verjüngung nach innen umfasst;
wobei das Magnetventil (60) normalerweise geschlossen und selektiv öffenbar ist, um einen Fluidfluss von der druckbeaufschlagten Flasche (50) zu ermöglichen, um den Befehlshohlraum mit Druck zu beaufschlagen, sodass der Dichtteller (40) in Richtung der offenen Position vorgespannt ist, wodurch druckbeaufschlagtes Fluid durch den Auslass strömt,
wobei die Magnetspule so konfiguriert ist, dass sie während der Druckbeaufschlagung des Befehlshohlraums (21) abgeschaltet wird,
woraufhin Drücke, die durch die Dichtungen und die Strömungsbegrenzungsöffnung auf den Dichtteller (40) ausgeübt werden, den Dichtteller (40) in der offenen Position halten.

2. Aufblassystem nach Anspruch 1, wobei ein erster Kolben des Dichttellers eine äußere oder untere Fläche aufweist, die eine Nut definiert, in die eine Ventildichtung einsetzbar ist, und das erste Gehäuse (10) einen Ventilsitz mit erhabenen Merkmalen umfasst, die abdichtend in die Ventildichtung eingreifen und die geschlossene Position annehmen.

3. Aufblassystem nach Anspruch 1, wobei das zweite Gehäuse (20) einen sekundären Einlass (22) definiert, durch den die druckbeaufschlagte Flasche (50) den Befehlshohlraum mit Druck beaufschlagt, wobei das Magnetventil (60) selektiv geöffnet ist.

4. Aufblassystem nach Anspruch 1, wobei das zweite Gehäuse (20) eine abnehmbare Endkappe umfasst.

5. Aufblassystem nach Anspruch 1, wobei:
die Trennwand (30) eine Apertur (31) definiert und
der Dichtteller (40) einen Schaft (43) umfasst, der einen ersten Abschnitt mit einem Durchmesser, der einen Durchmesser der Apertur (31) übersteigt, und einen zweiten Abschnitt, der sich von dem ersten Abschnitt durch die Apertur (31) und in den Befehlshohlraum erstreckt, umfasst.

## Revendications

1. Système de gonflage (5), comprenant :
un ensemble boîtier définissant une cavité d'entrée (11) avec une entrée (12) et une sortie (13) comprenant un orifice de limitation de débit (141) et une cavité de commande (21) ;
un champignon (40) jetable à l'intérieur de l'ensemble boîtier pour assumer des positions ouverte ou fermée ;
de multiples joints (310, 420) entre l'ensemble boîtier et le champignon ;
une bouteille pressurisée (50) pour pressuriser la cavité d'entrée (11) à travers l'entrée pour solliciter le champignon (40) vers la position fermée ; et **caractérisé par** une électrovanne (60) interposable entre la bouteille pressurisée (50) et la cavité de commande (21),
dans lequel l'ensemble boîtier comprend des premier et second boîtiers (10, 20) et un déflecteur (30) interposé entre les premier et second boîtiers (10, 20) ;
dans lequel le premier boîtier (10) définit :
l'entrée (12) à travers laquelle la bouteille pressurisée (50) pressurise l'entrée de cavité (11), et
la sortie (13) à travers laquelle le fluide pressurisé sort de la cavité d'entrée (11) avec le champignon (40) prenant la position ouverte ;
dans lequel l'orifice de limitation de débit (141) comprend un cône vers l'intérieur ;
l'électrovanne (60) étant normalement fermée et pouvant être ouverte sélectivement pour permettre l'écoulement du fluide depuis la bouteille pressurisée (50) pour pressuriser la cavité de commande de sorte que le champignon (40) est sollicité vers la position ouverte, moyennant quoi le fluide pressurisé circule à travers la sortie,
dans lequel le solénoïde est configuré pour être mis hors tension pendant la pressurisation de la cavité de commande (21) à la suite de quoi les pressions appliquées sur le champignon (40) par les joints et l'orifice de limitation de débit maintient le champignon (40) en position ouverte.

2. Système de gonflage selon la revendication 1, dans lequel un premier piston du champignon possède une face extérieure ou inférieure qui définit une rainure dans laquelle peut être inséré un joint de soupape et le premier boîtier (10) comprend un siège de soupape avec des caractéristiques surélevées qui vient en prise de manière étanche avec le joint de soupape en prenant la position fermée.

3. Système de gonflage selon la revendication 1, dans lequel le second boîtier (20) définit une entrée secondaire (22) à travers laquelle la bouteille pressurisée (50) pressurise la cavité de commande avec l'électrovanne (60) ouverte sélectivement.

4. Système de gonflage selon la revendication 1, dans lequel le second boîtier (20) comprend un embout amovible.

5. Système de gonflage selon la revendication 1, dans lequel :
le déflecteur (30) définit une ouverture (31), et
le champignon (40) comprend une tige (43), qui comprend une première section ayant un diamètre qui dépasse un diamètre de l'ouverture (31) et une seconde section qui se prolonge depuis la première section, à travers l'ouverture (31) et dans la cavité de commande.
